# EUROPÄISCHE PATENTSCHRIFT

(11) **EP 0 990 297 B1**
(45) Veröffentlichungstag und Bekanntmachung des Hinweises auf die Patenterteilung: **21.01.2004**
(21) Anmeldenummer: 98925374.5
(22) Anmeldetag: 19.06.1998
(51) Int. Cl.: H02K 7/09, H02K 21/02

(54) **MAGNETGELAGERTER ELEKTRISCHER ANTRIEB**
ELECTRIC DRIVE MECHANISM WITH A MAGNETIC BEARING
MACHINE ELECTRIQUE A PALIER MAGNETIQUE

(30) Priorität: 21.06.1997 DE 19726352
(43) Veröffentlichungstag der Anmeldung: 05.04.2000
(73) Patentinhaber: LUST ANTRIEBSTECHNIK GmbH, D-35633 Lahnau (DE)
(72) Erfinder: AMRHEIN, Wolfgang, A-4100 Ottensheim (AT)
(74) Vertreter: Sulzer Management AG
(86) Internationale Anmeldenummer: PCT/CH1998/000268
(87) Internationale Veröffentlichungsnummer: WO 1998/059407

(56) Entgegenhaltungen:
- EP-A- 0 726 638
- EP-A- 0 768 750
- WO-A-97/15978
- US-A- 5 036 235
- YOHJI OKADA ET AL: "LEVITATION AND TORQUE CONTROL OF INTERNAL PERMANENT MAGNET TYPE BEARINGLESS MOTOR" IEEE TRANSACTIONS ON CONTROL SYSTEMS TECHNOLOGY, Bd. 4, Nr. 5, September 1996, Seiten 565-571, XP000638977
- CHIBA A ET AL: "AN ANALYSIS OF BEARINGLESS AC MOTORS" IEEE TRANSACTIONS ON ENERGY CONVERSION, Bd. 9, Nr. 1, 1. März 1994, Seiten 61-68, XP000465454

## Beschreibung

Die Erfindung betrifft einen mägnetgelagerten elektrischen Antrieb gemäss Oberbegriff des unabhängigen Patentanspruchs.

Die Magnetlagertechnik erschliesst Applikationsfelder des Maschinen und Gerätebaus mit äusserst hohen Anforderungen an den Drehzahlbereich, die Lebensdauer, die Reinheit und die Dichtheit des Antriebssystems - also im wesentlichen Anwendungsgebiete, die unter Verwendung konventioneller Lagertechniken nicht oder nur schwer realisierbar sind. Verschiedene Ausführungen, wie beispielsweise Hochgeschwindigkeitsfräs- und Schleifspindeln, Turbokompressoren, Vakuumpumpen, oder Pumpen für hochreine chemische oder medizinische Erzeugnisse werden bereits mit Magnetlagern ausgerüstet.

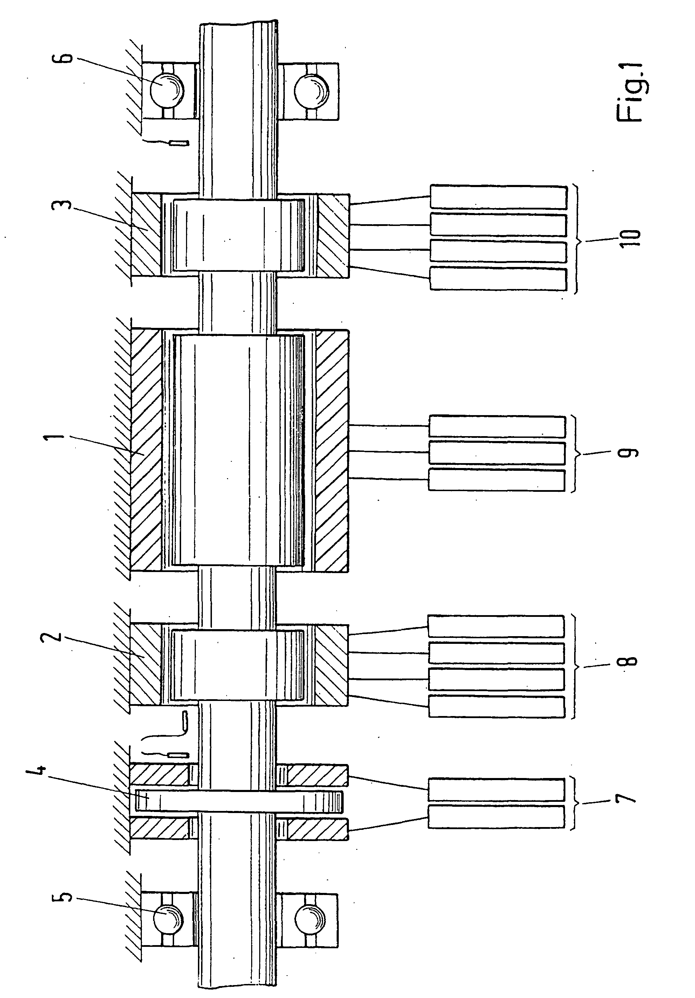

Eine konventionelle magnetgelagerte elektrische Maschine (Fig. 1) benötigt neben einer Maschineneinheit 1 zwei Radial-Magnetlager 2 bzw. 3, ein Axial-Magnetlager 4, zwei mechanische Auffanglager 5 bzw. 6 sowie für die Ansteuerung der Motor- und Magnetlagerstränge insgesamt dreizehn Leistungssteller 7,8,9 und 10.

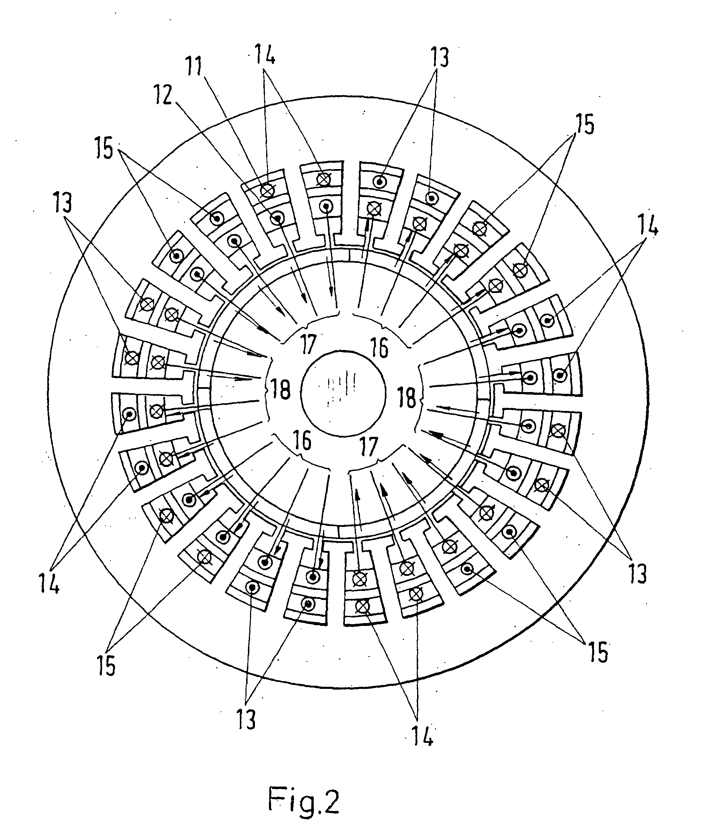

In der Literatur gibt es Vorschläge (Fig. 2), Maschine und Radialmagnetlager in einer magnetischen Statoreinheit zu integrieren. In einem Stator sind zwei getrennte Wicklungssysteme 11 und 12 für die Drehmoment- und Tragkraftwicklung mehrlagig in Nuten eingebracht. Beide Wicklungssysteme sind dreisträngig und unterscheiden sich in der Polpaarzahl um eins. Die Spulen sind über mehrere Nuten verteilt. Das Beispiel aus Fig. 2 zeigt:
- eine vierpolige Maschinenwicklung 11 (aussen): erster Strang 13, zweiter Strang 14, dritter Strang 15
- eine zweipolige Tragwicklung 12 (innen): erster Strang 16, zweiter Strang 17, dritter Strang 18.
Die Pfeile (ohne Bezugszeichen) vom Rotor in Richtung zum Stator hin bzw. vom Stator in Richtung zum Rotor hin stehen für die Richtung der Magnetisierung der vier magnetischen Rotorsegmente (z.B. radiale oder diametrale Magnetisierung).

Im Dokument EP 0 768 750 A wird ein geschalteter Reluktanzantrieb offenbart, mittels welchem ein Rotor mit hoher Geschwindigkeit rotiert werden kann. Der Reluktanzantrieb gemäss EP 0 768 750 A ist mit vorstehenden Statorpolen ausgestattet, welche mit einer Wicklung zur Drehmomentbildung und einer Wicklung zur Erzeugung einer Radialkraft versehen sind.

Im Dokument Yohji Okada et al.: "Levitation and Torque Control of Internal Permanent Magnet Type Bearingless Motor", IEEE Transactions on Control Systems Technology, Bd. 4, Nr. 5, Sept. 1996, Seiten 556-571, XP000638977 wird ein "lagerloser" Motor mit Permanentmagneterregung beschrieben. Das Dokument XP000638977 beschreibt insbesondere die Regelung des Magnetlagers für den Fall des permanentmagneterregten Synchronmotors und des Induktionsmotors. Die Tragkräfte werden durch Superposition eines P+2- oder P-2-poligen magnetischen Flusses mit dem normalen magnetischen Fluss des Motors (Polzahl P) erzeugt.

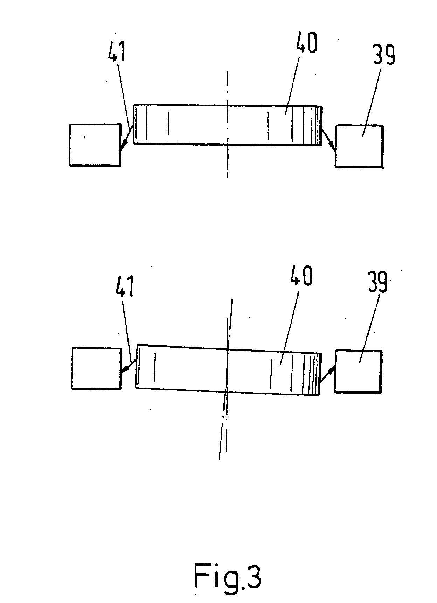

In Applikationen, die keine achsenstarre Rotorführung erfordern, wie beispielsweise in Ventilatoren, Lüftern, Pumpen oder Mischem kann in der integrierten Maschinen-Magnetlagerausführung das Axial-Magnetlager sowie das zweite Radial-Magnetlager entfallen. Voraussetzung hierfür ist eine scheibenförmige Ausführung des Rotors mit einer gegenüber dem Rotordurchmesser kleinen Längenabmessung (Fig. 3). Über den magnetischen Zug 41 zwischen Stator 39 und Rotor 40 lässt sich somit eine passive Stabilisierung der Rotorlage in axialer Richtung und den Kipprichtungen erzielen.

In vielen Fällen stehen jedoch dem technischen Einsatz der Magnetlagerung der aufwendige Systemaufbau und damit die hohen Herstellkosten im Wege. Die durch die Erfindung zu lösende Aufgabe besteht daher in der Vereinfachung des mechanischen Aufbaus der Maschinen- und Magnetlagereinheit unter Berücksichtigung der hierfür geeigneten elektronischen Ansteuerung.

Die erfindungsgemässe Lösung dieser Aufgabe geht aus den Merkmalen des unabhängigen Patentanspruchs hervor. Bevorzugte Ausführungsvarianten sind durch die Merkmale der abhängigen Ansprüche definiert. Von besonderem Vorteil bei der erfindungsgemässen Lösung des Problems ist der wesentlich vereinfachte Stator- bzw. Rotor- und Wicklungsaufbau der magnetgelagerten Maschine gegenüber bisher bekannten Lösungen, sowie die Einsparung von Leistungsstellern. So werden beispielsweise für einen magnetgelagerten Einphasen-Motor lediglich drei Stränge und sechs Spulen benötigt.

Ausführungsbeispiele der Erfindung sind nachstehend anhand der Zeichnungen erläutert. Es zeigen in schematischer Darstellung:
- Fig.1: ein Ausführungsbeispiel einer konventionellen magnetgelagerten elektrischen Maschine,
- Fig. 2: ein Ausführungsbeispiel einer konventionellen magnetgelagerten elektrischen Maschine, bei der Maschine und Radialmagnetlager in einer magnetischen Statoreinheit integriert sind.
- Fig. 3: eine Möglichkeit der passiven Stabilisierung des Rotors in axialer Richtung sowie in den Kipprichtungen,
- Fig. 4: ein Ausführungsbeispiel eines Stators des erfindungsgemässen magnetgelagerten elektrischen Antriebs,
- Fig. 5: ein Ausführungsbeispiel des erfindungsgemässen elektrischen Antriebs mit einer wicklungstechnischen Variante für einen Aussenläufer,
- Fig. 6: ein Ausführungsbeispiel eines elektrischen Antriebs mit mehreren verteilten Spulen,
- Fig. 7: ein Ausführungsbeispiel einer möglichen Brückenschaltung zur Ansteuerung des elektrischen Antriebs,
- Fig. 8: ein Ausführungsbeispiel des erfindungsgemässen magnetgelagerten Antriebs mit gesehnten konzentrierten Wicklungen sowie mit ausgeprägten Polen und Hilfspolen,
- Fig. 9: eine Darstellung der winkelabhängigen Kraftschwankungen bei nichtsinusförmigen Statorstrombelagsverteilungen und nichtsinusförmiger Erregerfeldverteilung im Luftspalt,
- Fig. 10: ein Ausführungsbeispiel des erfindungsgemässen Antriebs mit unsymmetrischem Blechschnitt im Bereich der Wicklungspole,
- Fig. 11: ein Ausführungsbeispiel eines erfindungsgemässen Antriebs mit einem Hilfsmagneten zur Sicherstellung des Anlaufs bei einem Motorbetrieb mit Wechselfeld,
- Fig. 12: eine Möglichkeit des gesteuerten Abwälzens des Rotors an den Statorpolen,
- Fig. 13: ein Ausführungsbeispiel eines erfindungsgemässen Antriebs mit einseitig auf den Statorpolen angebrachten Kurzschlussringen,
- Fig.14: ein Ausführungsbeispiel eines erfindungsgemässen Antriebs mit einer speziellen Formgebung der Magnetsegmente zur Erzielung einer sinusförmigen Erregerfeldverteilung im Luftspalt und
- Fig. 15: ein Ausführungsbeispiel eines Stators des erfindungsgemässen magnetgelagerten Antriebs mit der Möglichkeit einer Drehfelderzeugung sowohl bei Maschine als auch beim Radiallager.

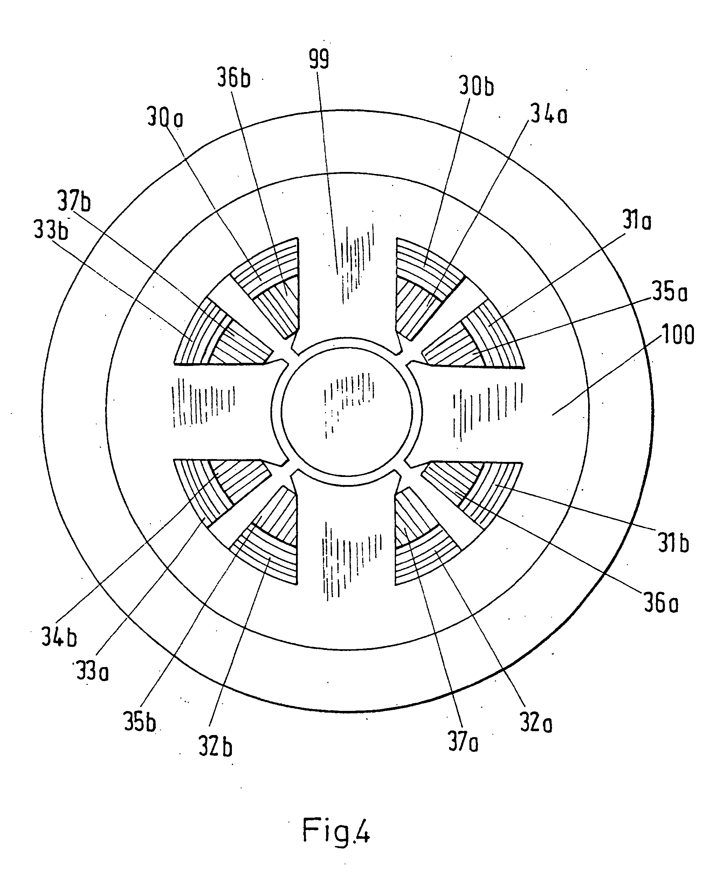

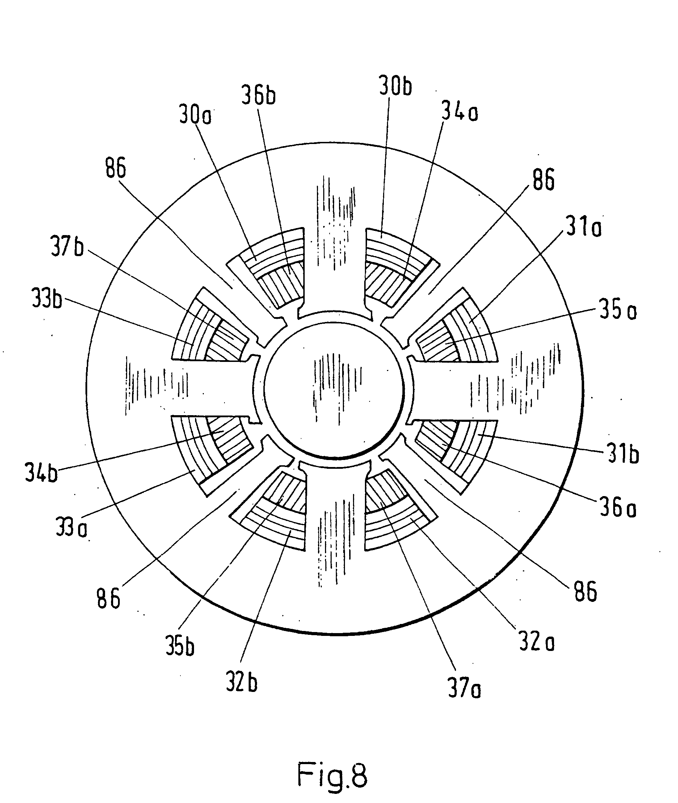

Die Maschinen können abhängig von der Applikation als Motor oder als Generator betrieben werden. Fig. 4 zeigt eine Ausführungsform einer Maschinen-Magnetlager-Einheit (der Stator ist z.B. zur besseren Kühlung in einem Aluminiumring bzw einem Aluminiumzylinder eingefasst) mit konzentrierten Durchmesserwicklungen und ausgeprägten Polen. Unter konzentrierten Wicklungen sollen hierbei Wicklungen verstanden werden, deren Spulen über eine Polteilung nicht verteilt und gleichzeitig zueinander (magnetisch wirksam) versetzt sind. So werden beispielsweise die Spulen 34 bzw. 35 als konzentriert betrachtet. Unter ausgeprägten Polen werden ferromagnetische Pole oder Luftspulenpole verstanden, die von einer konzentrierten Wicklung umschlossen werden. Hierunter fallen beispielsweise Schenkelpole 99, die von der konzentrierten Wicklung umschlossen werden, oder einfach oder mehrfach geteilte Pole wie 99 und 100, die von der konzentrierten Spule 36 magnetisch eingeschlossen werden. Die Wicklungen können auch gesehnt, d.h. mit einer Wicklungsweite kleiner oder grösser einer Polteilung ausgeführt sein. Ein Ausführungsbeispiel hierzu ist in Fig. 8 dargestellt. Bei starker Sehnung ist es unter Umständen günstig, die durch Verkürzen der Polweite entstehende Pollücke mit einem ferromagnetischen Hilfspol 86 zu schliessen. Die Funktionen der Drehmoment- und Tragkraftbildung sind in den Anordnungen aus Fig. 4 und Fig. 8 durch zwei Wicklungssysteme realisiert. Eine einsträngige, vierpolige Maschinenwicklung sowie eine zweisträngige, zweipolige Magnetlagerwicklung.

Der Maschinenstrang wird aus den Spulen 30, 31, 32 und 33, der erste Magnetlagerstrang aus den Spulen 34 sowie 35 und der zweite Magnetlagerstrang aus den Spulen 36 sowie 37 gebildet. Die konzentrierten Spulen des Maschinenstrangs bilden mit dem ferromagnetischen Werkstoff ausgeprägte Pole (hier: Schenkelpole). Sie können je nach Bedarf seriell oder parallel miteinander verschaltet werden und bilden bei Speisung mit einem Wechselstrom ein vierpoliges Drehfeld aus, das genügt, um beispielsweise an einem vierpoligen Permanentmagnetrotor ein Drehmoment zu erzeugen. Der erste und der zweite Magnetlagerstrang sind im Winkel von neunzig Grad zueinander angeordnet. Über eine entsprechende Bestromung der Magnetlagerstränge wird ein zweipoliges Drehfeld zur Einstellung der radialen Tragkraft in Amplitude und Phase aufgebaut. Die Spulen eines Maschinen- oder Magnetlagerstranges aus der Fig. 4 sind seriell oder parallel verschaltet. Die Magnetlagerspulen 34 und 35 bzw. die Spulen 36 und 37 können bei Bedarf jeweils zu einer Einzelspule zusammengefasst werden und bilden konzentrierte Wicklungen.

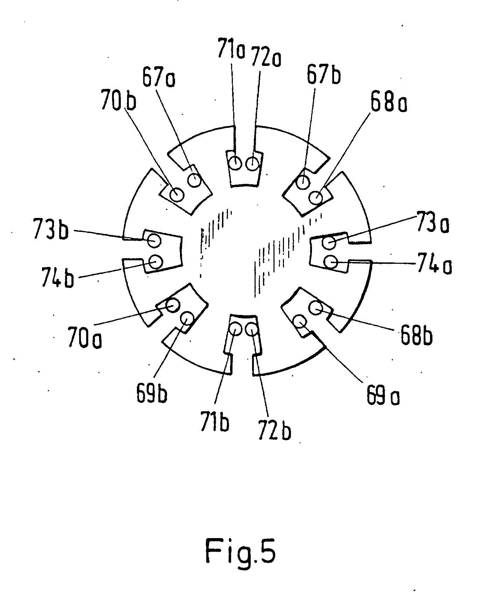

In Fig. 5 ist eine wicklungstechnische Variante für einen Aussenläuferantrieb mit ebenfalls einer einsträngigen, vierpoligen Maschinenwicklung 67,68,69,70 und einer zweisträngigen, zweipoligen Magnetlagerwicklung mit dem ersten Strang 71,72 und dem senkrecht hierzu angeordneten zweiten Strang 73,74 dargestellt. Die beiden Stränge der Magnetlagerwicklung können auch um 45° gedreht und in Nuten der Maschinenwicklung gelegt werden, sodass sich ein Aufbau ähnlich wie in Fig. 4 ergibt. Weiterhin lassen sich die Spulen 71,72 und 73,74 zu jeweils einer Spule zusammenfassen. Den Maschinenstrang betreffend könnte auch auf zwei einander gegenüberliegende Spulen, z.B. 68,70 verzichtet werden. Der Aussenläufer der Anordnung aus Fig. 5 wird vorzugsweise als vierpoliger Ring oder Glocke ausgeführt.

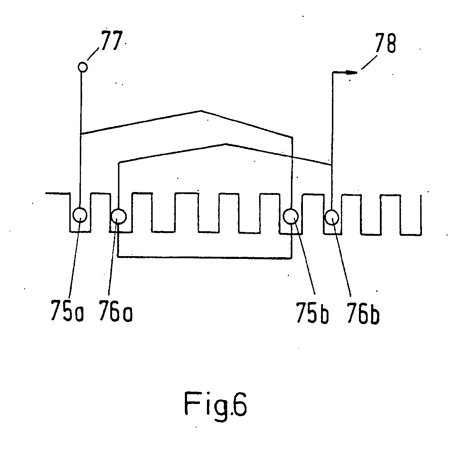

Alternativ zu den Anordnungen aus Fig. 4 und 5 kann die Maschinenwicklung oder die Magnetlagerwicklung auch aus mehreren (dargestellt: zwei) verteilten Spulen 75,76 aufgebaut werden (Fig. 6). In Fig. 6 erkennt man entsprechend einen ersten Stranganschluss 77 und einen zweiten Stranganschluss 78 bzw. die Weiterleitung zu dem nächsten benachbarten Wicklungspol mit umgekehrtem Wicklungssinn.

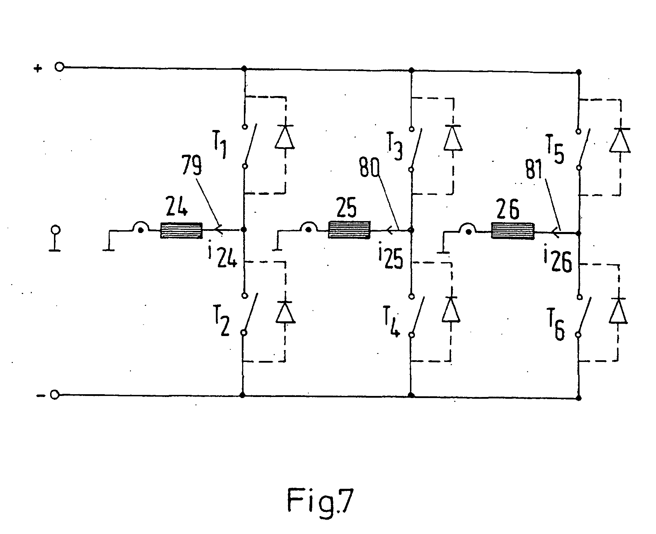

Die Bestimmung der einzelnen Strangströme erfolgt unter Beachtung der Sollgrössenvorgabe und der ist-Werte beispielsweise der Rotorlage und Drehzahl, Rotordrehwinkel oder Drehmoment nach Auswertung der Sensorsignale für Rotorlage und Rotordrehwinkel mittels einer Analogschaltung oder einer schnellen Rechnereinheit. Die ermittelten Signale werden von einer Leistungselektronik verstärkt und den drei Strängen über getaktete Schalter oder analoge Leistungsverstärker zugeführt. Eine mögliche Brückenschaltung ist in Fig. 7 angegeben. Mit 24 ist der Maschinenstrang, mit 25 und 26 die beiden Magnetlagerstränge bezeichnet. Anstelle einer Stromeinprägung kann auch unter Berücksichtigung der Charakteristik der Regelstrecke eine Spannungseinprägung erfolgen.

Die Rotorart der Maschine kann frei gewählt werden, insbesondere dann, wenn der Maschinenbetrieb über ein Drehfeld anstelle eines Wechselfeldes erfolgt. Verwendbar sind beispielsweise Permanentmagnetrotoren, Kurzschlusskäfigrotoren oder Rotoren mit einer elektrisch hochleitfähigen Metallummantelung anstelle des Kurzschlusskäfigs.

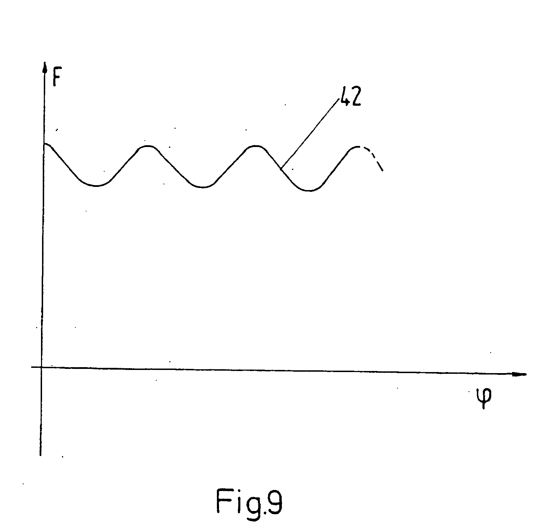

Bei nicht ausreichender Sehnung bzw. Verteilung der Wicklungen und bei nichtsinuförmigen Erregerfeldverteilungen entstehen durch den Oberwellengehalt der Luftspaltfelder bei Bestromung eines Strangs der Radiallagerwicklung gemäss Fig. 4, Fig. 5 oder Fig. 8 mit einer konstanten Stromamplitude bei Drehung des Rotors winkelabhängige radiale Kraftschwankungen 42, wie sie beispielsweise in Fig. 9 dargestellt sind. Diesem Effekt sollte, um ein gutes Betriebsverhalten zu erzielen, bei der Bestromung der Wicklungen Rechnung getragen werden.

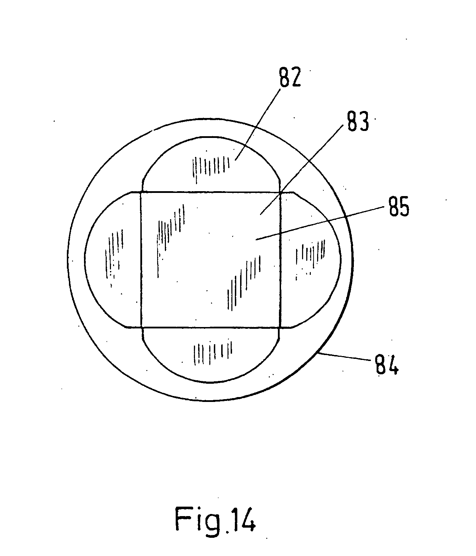

Eine annähernd sinusförmige Erregerfeldverteilung lässt sich bei Verwendung von Permanentmagnetrotoren 85 beispielsweise durch eine Formgebung 82 mit einem winkelabhängigen Luftspalt zwischen dem Rotor und dem Stator 84 gemäss Fig. 14 erzielen. Günstig wirkt sich hinsichtlich einer sinusförmigen Feldverteilung auch eine diametrale Magnetisierung der Permanentmagnete aus. Mit 83 ist der ferromagnetische Rückschluss des Rotors bezeichnet. Aus Kostengründen kann es jedoch von Vorteil sein, konzentrierte Wicklungen und radial oder diametral magnetisierte Magnete ohne besondere Formgebung einzusetzen.

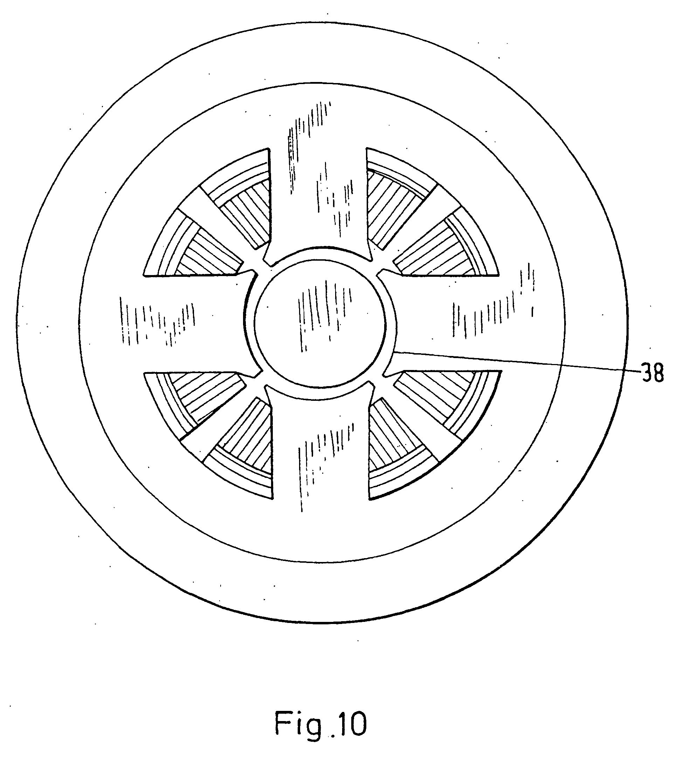

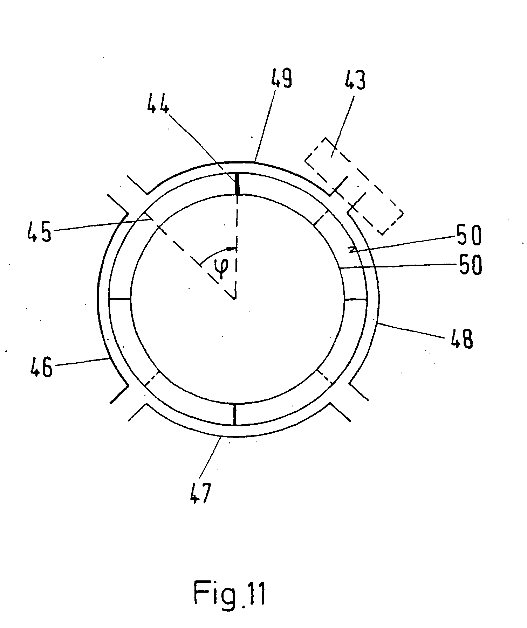

Da in der magnetgelagerten Maschine aus Fig. 4 bzw. Fig. 5 für den Maschinenbetrieb nur ein Wechselfeld zur Verfügung steht, ist zum Zeitpunkt des Anläufes gegebenenfalls ein Hilfsmoment zur Überwindung der Totzone bereitzustellen. Dies kann beispielsweise durch einen unsymmetrischen Blechschnitt 38 im Bereich der Wicklungspole erfolgen (Fig. 10). Eine weiterer Lösungsvorschlag (Fig. 11) sieht einen oder mehrere axial oder radial zum Rotor angebrachte Hilfsmagnete 43 vor, die beispielsweise den vierpoligen Permanentmagnetrotor 50 aufgrund ihrer Zugkraft beim Starten in eine günstige Ausgangsposition 44 mit dem Winkel ϕ bringen. In der Stellung 45 der Magnetpolgrenze wäre das Startmoment bei beliebig hohem Strom null. Mit 46,47,48 und 49 sind die Wickfungspole angedeutet. Um die Zugkraft zu unterstützen, können die Hilfsmagnete zusätzlich mit einem Eisenrückschluss versehen werden.

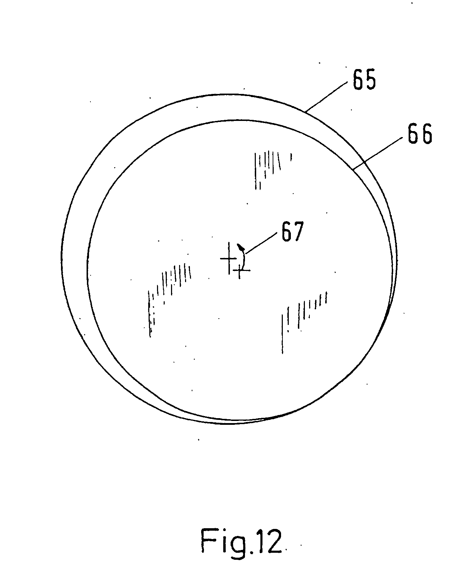

Eine Veränderung der Magnetpollage könnte auch durch ein vom Magnetlagerteil gesteuertes Abwälzen (Fig. 12) des Rotors 66 an der Luftspaltstirnseite der Statorpole 65 bewirkt werden. Infolge der unterschiedlichen Durchmesser ergibt sich beim Abwälzen eine wachsende Winkelverschiebung zwischen Magnet- und Statorpolen, sodass der Rotor aus der Totzone, in der eine Drehmomententwicklung nicht möglich ist, herausgedreht werden kann. Mit 67 ist die Mittelpunktsbewegung des Rotors während des Abwälzens dargestellt. Es kann erforderlich sein, am Umfang des Rotors und/oder Stators Mittel zur Verhinderung eines Gleitens zwischen Rotor und Stator während der Abwälzbewegung vorzusehen (z. B. Verwendung von Werkstoffen mit hohen Reibwerten, Aufrauhen der Oberflächen, Verzahnung, etc.).

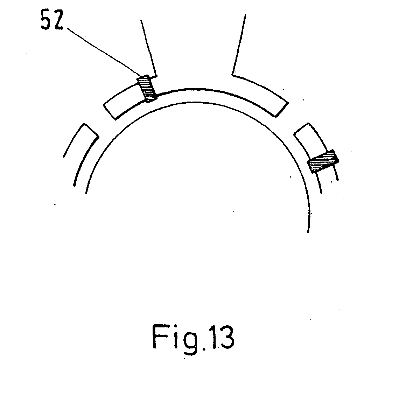

Eine weiterer Lösungsvorschlag ist in Fig 13 dargestellt. Die Statorpole sind einseitig mit einem Kurzschlussring 52 versehen, sodass sich aufgrund der Kurzschlussströme anstelle des Wechselfeldes ein stark elliptisches Drehfeld im Luftspalt ergibt.

Die Figuren 4, 5, 8 und 10 sind auch bezüglich der Polpaarzahl für die Drehmoment- und Tragkraftbildung sowie bezüglich der Strangzahl der beiden Wicklungen als beispielhaft zu sehen. Es lassen sich auch veränderte Polpaarzahlen realisieren, wobei zwischen der Polpaarzahl p_{M} für den Maschinenbetrieb und der Polpaarzahl p_{ML} für den Magnetlagerbetrieb die Beziehung p_{M} = p_{ML} ± 1 erfüllt sein muss. Durch Erweiterung der Strangzahl sowie der Anzahl Brückenzweige in der Leistungselektronik lässt sich auch erfindungsgemäss anstelle der Wechselfeldmaschine eine Drehfeldmaschine in den magnetgelagerten Antrieb integrieren.

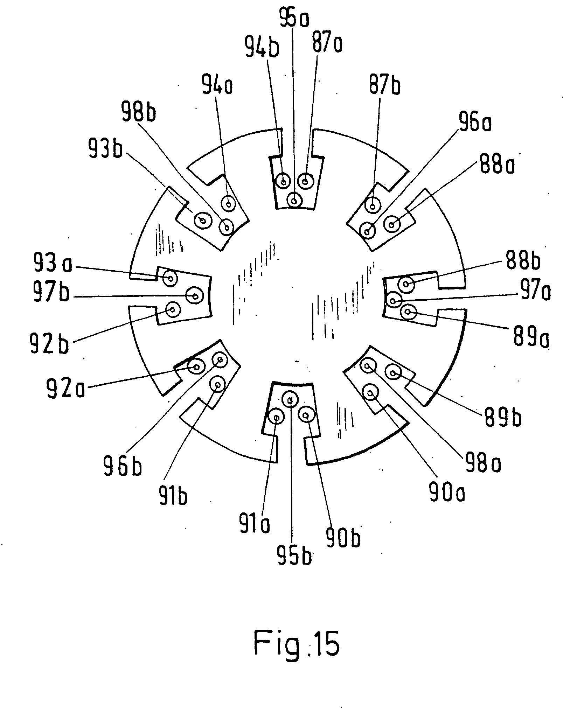

Ein mögliches Ausführungsbeispiel hierzu ist in Fig. 15 dargestellt. Der Stator enthält zwei vierpolige Maschinenstränge bestehend aus den seriell oder parallel verschalteten Spulen 87,89,91,93 und 88,90,92,94. Die Maschinenstränge sind zueinander elektrisch um 90° versetzt, sodass ein Ankerdrehfeld zur Drehmomentbildung mit einem vierpoligen Rotor ohne Momentenlücke aufgebaut werden kann. Diese Anordnung benötigt daher im Unterschied zu vorangegangenen Beispielen keine Anlaufhilfe.

Die Durchmesserspulen 95 und 97 bilden die beiden geometrisch um 90° versetzten Stränge des Radialmagnetlagers. Auch hier ist eine Drehfeldbildung möglich. Zur besseren Ausnutzung des zur Verfügung stehenden Wickelraums können zwei weitere Spulen 96 und 98 eingebracht und beispielsweise die Spule 96 mit der Spule 95 und die Spule 98 mit der Spule 97 zu je einem Strang verschaltet werden.

Eine andere Konstruktionsvariante ebenfalls mit den Polpaarzahlen zwei und eins in den Statorwicklungen könnte auch mit einem zweipoligen Rotor realisiert werden. Hierzu wäre die ein- oder mehrsträngige Maschinenwicklung zweipolig und die mehrsträngige Magnetlagerwicklung vierpolig zu wählen.

Ein weiterer wesentlicher, von den zuvor erläuterten Aspekten vollständig unabhängiger Aspekt der Erfindung beruht schliesslich auf der Erkenntnis, dass es möglich ist, die magnetgelagerte Maschine des erfindungsgemässen elektrischen Antriebs im Stator oder Rotor mit getrennten Wicklungen für die Momenten- und die Tragkraftbildung auszustatten und dabei die Maschinenwicklung einsträngig auszubilden.

## Patentansprüche

1. Magnetgelagerter elektrischer Antrieb, umfassend eine magnetgelagerte elektrische Maschine und eine analoge oder digitale Elektronik zur Steuerung, Regelung, Überwachung und Speisung der magnetgelagerten Maschine, welche magnetgelagerte Maschine einen Rotor, weicher mit Permanentmagneten, einem Kurzschlusskäfig, oder einer elektrisch hochleitfähigen Metallummantelung bestückt ist, und einen Stator umfasst, in welchem Maschinen- und Magnetlagerwicklungen für die Momenten- und Tragkraftbildung eingebracht sind, **dadurch gekennzeichnet, dass** die magnetgelagerte Maschine im Stator mit getrennten ein- oder mehrsträngigen Wicklungen mit der Polpaarzahl p_{M} für die Momentenbildung (30, 31, 32, 33) und mit der Polpaarzahl p_{ML} = p_{M} ± 1 für die Tragkraftbildung (34, 35, 36, 37) ausgestattet ist, wobei mindestens eine der Wicklungen als konzentrierte Wicklung mit ausgeprägten Wicklungspolen ausgebildet ist.

2. Elektrischer Antrieb nach Anspruch 1, **dadurch gekennzeichnet, dass** die Magnetlagerwicklung zur Tragkraftbildung (34, 35, 36, 37) zur Ausbildung eines Drehfeldes mehrsträngig ausgebildet ist.

3. Elektrischer Antrieb nach Anspruch 1, **dadurch gekennzeichnet, dass** die Maschinenwicklung zur Momentenbildung (30, 31, 32, 33) zur Ausbildung eines Drehfeldes mehrsträngig oder zur Ausbildung eines Wechselfeldes einsträngig ausgebildet ist.

4. Elektrischer Antrieb nach Anspruch 1, **dadurch gekennzeichnet, dass** die konzentrierte Wicklung als Durchmesserwicklung (30, 31, 32, 33) ausgebildet ist.

5. Elektrischer Antrieb nach Anspruch 1, **dadurch gekennzeichnet, dass** die konzentrierte Wicklung gesehnt und damit mit einer Spulenweite kleiner oder grösser als eine Polteilung versehen ist.

6. Elektrischer Antrieb nach einem der vorangehenden Ansprüche, **dadurch gekennzeichnet, dass** die Magnetlagerwicklung zweisträngig (34, 35; 36, 37) und die Motorwicklung einsträngig (30, 31, 32, 33) ausgebildet ist, und dass die Polpaarzahlen der Magnetlagerwicklung (34, 35; 36, 37) und der Motorwicklung (30, 31, 32, 33) ohne Wertung der Reihenfolge eins und zwei betragen.

7. Elektrischer Antrieb nach einem der vorangehenden Ansprüche, **dadurch gekennzeichnet, dass** im Falle einer einsträngigen Maschinenwicklung eine Anlaufhilfe für den sicheren Anlauf vorgesehen ist, insbesondere in der Gestalt eines unsymmetrischen Statorblechschnittes (38), eines oder mehrerer Hilfsmagnete (43) oder eines oder mehrerer Kurzschlussringe (13), oder dass eine günstige Anlaufposition des Rotors über eine entsprechende Ansteuerung der Magnetlagerwicklungen durch Abrollen (67) des Rotors auf der dem Rotor zugewandten Statorfläche eingestellt wird.

8. Elektrischer Antrieb nach einem der vorangehenden Ansprüche, **dadurch gekennzeichnet, dass** der magnetisch wirksame Teil des Rotors (40) und vorzugsweise auch des Stators (39) scheiben-, ring- oder glockenförmig mit gegenüber den radialen Abmessungen kleinen axialen Abmessungen ausgeführt ist, sodass aufgrund der Kraftwirkung (41) der magnetischen Luftspaltfelder eine für den Betrieb ausreichende stabile passive magnetische Lagerung des Rotors in axialer Richtung und den beiden Kipprichtungen erfolgt.

9. Elektrischer Antrieb nach einem der vorangehenden Ansprüche, **dadurch gekennzeichnet, dass** sämtliche Wicklungen, also sowohl die Maschinenals auch die Magnetlagerwickfungen, als konzentrierte Wicklungen ausgebildet sind.

## Claims

1. Magnetically journalled electrical drive comprising a magnetically journalled electrical machine and an analog or digital electronic system for the control, regulation, monitoring and excitation of the magnetically journalled machine, which magnetically journalled machine includes a rotor which is equipped with permanent magnets, a short-circuit cage or an electrically highly conductive metal jacket, and a stator in which machine and magnetic bearing windings are inserted for the production of the torque and the suspension force, **characterised in that** the magnetically journalled machine is equipped in the stator with separate single or multiple phase windings with the pole-pair number P_{M} for the production of torque (30, 31, 32, 33) and with the pole-pair number p_{ML} = p_{M} ± 1 for the production of suspension force (34, 35, 36, 37), with at least one of the windings being formed as a concentrated winding with pronounced winding poles.

2. Electrical drive in accordance with claim 1 **characterised in that** the magnetic bearing winding for the production of suspension force (34, 35, 36, 37) is formed in a number of phase windings for the development of a rotary field.

3. Electrical drive in accordance with claim 1 **characterised in that** the machine winding for the production of torque (30, 31, 32, 33) is formed in a number of phase windings for the production of a rotary field or with a single phase winding for the production of an alternating field.

4. Electrical drive in accordance with claim 1 **characterised in that** the concentrated winding is formed as a full pitch winding (30, 31, 32, 33).

5. Electrical drive in accordance with claim 1 **characterised in that** the concentrated winding is fractionally pitched and is thereby provided with a coil width which is less than or greater than a pole division.

6. Electrical drive in accordance with one of the preceding claims **characterised in that** the magnetic bearing winding is formed in two phase windings (34, 35; 36, 37) and the motor winding is formed in one phase winding (30, 31, 32, 33); and **in that** the numbers of pole pairs of the magnetic bearing winding (34, 35; 36, 37) and of the motor winding (30, 31, 32, 33) amount to one and two without valuing of the sequence.

7. Electrical drive in accordance with one of the preceding claims **characterised in that** in the case of a single phase machine winding a start-up aid for the reliable start-up is provided, in particular in the form of an asymmetrical stator sheet metal cut (38), of one or more auxiliary magnets (43) or of one or more short-circuit rings (13); or **in that** a favourable start-up position of the rotor is set via a corresponding excitation of the magnetic bearing windings through rolling off (67) of the rotor on the stator surface which faces the rotor.

8. Electrical drive in accordance with one of the preceding claims **characterised in that** the magnetically effective part of the rotor (40) and preferably also of the stator (39) is designed in disc, ring or bell shape with small axial dimensions relative to the radial dimensions so that a stable passive magnetic journalling of the rotor in the axial direction and in the two tilt directions which is sufficient for the operation arises as a result of the force action (41) of the magnetic air gap fields.

9. Electrical drive in accordance with one of the preceding claims **characterised in that** all windings, i.e. both the machine windings and the magnetic bearing windings, are formed as concentrated windings.

## Revendications

1. Entraînement électrique à paliers magnétiques comprenant une machine électrique sur paliers magnétiques et une électronique analogique ou numérique pour la commande, la régulation, la surveillance et l'alimentation de la machine sur paliers magnétiques, cette machine sur paliers magnétiques comprenant un rotor muni d'aimants permanents, d'une cage d'écureuil ou d'une gaine métallique à haute conductivité électrique, et un stator dans lequel sont intégrés des enroulements de machine et de palier magnétique pour la génération de moment et de force portante, **caractérisé en ce que** la machine à paliers magnétiques est équipée dans le stator avec des enroulements monophasés ou polyphasés séparés avec nombre de paires de pôles p_{M} pour la génération de moment (30, 31, 32, 33) et avec le nombre de paires de pôles p_{ML} = p_{M} ±1 pour la génération de force portante (34, 35, 36, 37), au moins l'un des enroulements étant réalisé sous forme d'enroulement concentré avec des pôles d'enroulement saillants.

2. Entraînement électrique selon la revendication 1, **caractérisé en ce que** l'enroulement à paliers magnétiques pour la génération de force portante (34, 35, 36, 37) est réalisé avec plusieurs phases pour la génération d'un champ magnétique rotatif.

3. Entraînement électrique selon la revendication 1, **caractérisé en ce que** l'enroulement de machine de génération de moment (30, 31, 32, 33) est réalisé avec plusieurs phases pour la génération d'un champ magnétique rotatif ou réalisé avec une seule phase pour la génération d'un champ alternatif.

4. Entraînement électrique selon la revendication 1, **caractérisé en ce que** l'enroulement concentré (30, 31, 32, 33) est réalisé sous forme d'un enroulement diamétral.

5. Entraînement électrique selon la revendication 1, **caractérisé en ce que** l'enroulement concentré est à cordes et donc muni d'un pas d'enroulement supérieur ou inférieur à un pas polaire.

6. Entraînement électrique selon l'une quelconque des revendications précédentes, **caractérisé en ce que** l'enroulement à paliers magnétiques est réalisé avec deux phases (34, 35 ; 36, 37) et l'enroulement de moteur est réalisé avec une phase (30, 31, 32, 33), et **en ce que** les nombres de paires de pôles de l'enroulement à paliers magnétiques (34, 35 ; 36, 37) et de l'enroulement de moteur 30, 31, 32, 33) correspondent à un et deux, sans évaluation de l'ordre.

7. Entraînement électrique selon l'une quelconque des revendications précédentes, **caractérisé en ce que** dans le cas d'un enroulement de machine monophasé, un dispositif d'aide au démarrage est prévu pour assurer le démarrage, en particulier sous la forme d'une découpe asymétrique de la tôle de stator (38), d'un ou de plusieurs aimants auxiliaires (43) ou d'une ou de plusieurs bagues court-circuitées (13), ou **en ce qu'**une position de démarrage favorable du rotor est réglée par l'intermédiaire d'une commande d'amorçage correspondante des enroulements à paliers magnétiques par le roulement (67) du rotor sur la surface de stator orientée vers le rotor.

8. Entraînement électrique selon l'une quelconque des revendications précédentes, **caractérisé en ce que** la partie magnétique active du rotor (40) et de préférence également celle du stator (39) est réalisée sous forme de disque, d'anneau ou de cloche avec des dimensions axiales petites par rapport aux dimensions radiales, de sorte que grâce à l'effet dynamique (41) des champs magnétiques discontinus, un logement magnétique passif stable suffisant du rotor dans la direction axiale et dans les deux directions de basculement a lieu.

9. Entraînement électrique selon l'une quelconque des revendications précédentes, **caractérisé en ce que** tous les enroulements, donc les enroulements de machine et les enroulements à paliers magnétiques, sont réalisés sous forme d'enroulements concentrés.
